# EUROPEAN PATENT APPLICATION

(11) **EP 4 566 807 A1**
(43) Date of publication of application: **11.06.2025**
(21) Application number: 23214074.9
(22) Date of filing: 04.12.2023
(51) Int. Cl.: B32B 7/025, B32B 7/12, B32B 9/00, B32B 9/04, B32B 15/04, C09J 7/00

(54) **AN ADHESIVE SHEET**

(71) Applicant: Henkel AG & Co. KGaA, 40589 Düsseldorf (DE)
(72) Inventor: Franken, Uwe, 41542 Dormagen (DE); Lammerschop, Olaf, 47802 Krefeld (DE); Fleck-Kunde, Tom, 40225 Düsseldorf (DE); Buga, Duygu, 41564 Kaarst (DE)

(57) **Abstract**

The present invention is directed to an adhesive sheet for use in e-battery bonding comprising: a first electrically conductive foil; a second electrically conductive foil; and an electrically conductive and debondable 2K epoxy adhesive composition, wherein the electrically conductive and debondable 2K epoxy adhesive composition is disposed between the first and second conductive foils.

## Description

### FIELD OF THE INVENTION

The present invention relates to an adhesive sheet for use in e-battery bonding comprising: a first electrically conductive foil; a second electrically conductive foil; and an electrically conductive and debondable 2K epoxy adhesive composition, wherein the electrically conductive and debondable 2K epoxy adhesive composition is disposed between the first and second conductive foils.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications.

Noting these problems, certain authors have sought to develop debondable adhesive compositions, wherein the passage of an electrical current through the cured compositions acts to disrupt the bonding at the interface of the adhesive and the substrate.

US Patent No. 7,465,492 (Gilbert) describes an disbondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to disbond from the surface.

US 2007/0269659 (Gilbert) describes an adhesive composition disbondable at two interfaces, the composition: (i) comprising a polymer and an electrolyte; (ii) facilitating joinder of two surfaces; and, (iii) in response to a voltage applied across both surfaces so as to form an anodic interface and a cathodic interface, disbonding from both the anodic and cathodic surfaces.

US 2008/0196828 (Gilbert) describes a hot-melt adhesive composition comprising: a thermoplastic component; and, an electrolyte, wherein the electrolyte provides sufficient ionic conductivity to the composition to enable a faradaic reaction at a bond formed between the composition and an electrically conductive surface and to allow the composition to disbond from the surface.

WO2017/133864 (Henkel AG & Co. KGaA) describes a method for reversibly bonding a first and a second substrate, wherein at least the first substrate is an electrically non-conductive substrate, the method comprising: a) coating the surface of the electrically non-conductive substrate(s) with a conductive ink; b) applying an electrically debondable hot melt adhesive composition to the conductive ink-coated surface of the first substrate and / or the second substrate; c) contacting the first and the second substrates such that the electrically debondable hot melt adhesive composition is interposed between the two substrates; d) allowing formation of an adhesive bond between the two substrates to provide bonded substrates; and, e) applying a voltage to the bonded substrates whereby adhesion at an interface between the electrically debondable hot melt adhesive composition and a substrate surface is substantially weakened.

There remains a need in the art to provide an adhesive system which can be conveniently used in combination with conventional structural adhesives, which upon curing thereof can provide an effective bond within composite structures containing substrates but which can be effectively de-bonded from those substrates by the facile application of an electrical potential across the cured adhesive.

### SUMMARY OF THE INVENTION

The present invention relates to an adhesive sheet for use in e-battery bonding comprising: a first electrically conductive foil; a second electrically conductive foil; and an electrically conductive and debondable 2K epoxy adhesive composition comprising a first part comprising: a) an epoxy resin; b) an electrolyte; c) an electrically conductive filler; and d) an electrically non-conductive filler; and a second part comprising: a curing agent; an electrically non-conductive filler and, c) an accelerator; wherein the electrically conductive and debondable 2K epoxy adhesive composition is disposed between the first and second conductive foils.

The present invention also relates to a bonded structure comprising a first material layer (electrically non-conductive); a first structural adhesive; a second structural adhesive; a second material layer (electrically non-conductive); wherein a cured adhesive sheet as defined in the present invention is disposed between the first and second structural adhesives, and wherein the first structural adhesive is on a surface of the first material layer and the second structural adhesive is on a surface of the second material layer.

The present invention also encompasses a method of debonding said bonded structure according to the present invention, the method comprising the steps of: 1) applying a voltage across both electrically conductive foil surfaces to form an anodic interface and a cathodic interface; and 2) debonding the surfaces, wherein the voltage applied in step 1 is preferably from 0.5 to 200 V and it is preferably applied from 1 second to 60 minutes.

### SHORT DESCRIPTION OF THE FIGURES

Figure 1 illustrates the adhesive sheet according to the present invention.
Figure 2 illustrates the adhesive sheet and electrical contact for debonding.
Figure 3 illustrates how the debonding occurs at the positive interface.
Figure 4 illustrates the bonded structure according to the present invention.
Figure 5 illustrates the debonding effect of the example composition.

### DEFINITIONS

As used herein, the singular forms "a", *"an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of"* excludes any element, ingredient, member or method step not specified.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x"* specifically includes 0 wt.%: the ingredient defined by said range may be absent from the composition or may be present in the composition in an amount up to x wt.%.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of said coating layer is located.

*"electrically conductive substrates"* in the context of the present invention are understood to be a material or sheet which has an electrical conductivity >10⁵ S/m and is made out of metal (e.g. Al, Cu, Ag, Au) graphite, carbon, carbon nanotubes.

*"Two-part (2K) compositions"* in the context of the present invention are understood to be compositions in which a first part (A) and a second part (B) must be stored in separate vessels because of their (high) reactivity. The two parts are mixed only shortly before application and then react, typically without additional activation, with bond formation and thereby formation of a polymeric network. Herein higher temperatures may be applied in order to accelerate the cross-linking reaction.

As used herein the term *"debondable"* means that, after curing of the adhesive, the bond strength can be weakened by at least 50% upon application of an electrical potential of from 10V - 75V for a duration of from 1s to 60 minutes. The cured adhesive is applied between two substrates which are bonded by said adhesive so that an electric current is running through the adhesive bond line. Bond strength is measured by Tensile Lap Shear (TLS) test performed at room temperature and based upon EN 1465:2009 (German version) *Based on Adhesives* - *Determination of tensile lap-shear strength of bonded assemblies.* The bond overlapping area was 25 mm x 10 mm with a bond thickness of about 150 µm.

As used herein, the term "monomer" refers to a substance that can undergo a polymerization reaction to contribute constitutional units to the chemical structure of a polymer. The term *"monofunctional",* as used herein, refers to the possession of one polymerizable moiety. The term *"polyfunctional",* as used herein, refers to the possession of more than one polymerizable moiety.

As used herein, the term *"equivalent (eq.")* relates, as is usual in chemical notation, to the relative number of reactive groups present in the reaction.

The term *"electrolyte"* is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable adhesive compositions of the present invention and the cured adhesives obtained therefrom possess *"electrolyte functionality"* in that the adhesive material permits the conduction of ions, either anions, cations or both. The electrolyte functionality is understood to derive from the ability of the compositions and cured adhesives to solvate ions of at least one polarity.

As used herein, *"(meth)acryl"* is a shorthand term referring to *"acryl"* and/or *"methacryl".* Thus the term *"(meth)acrylamide"* refers collectively to acrylamide and methacrylamide.

As used herein, "*C₁*-*Cₙ alkyl"* group refers to a monovalent group that contains 1 to n carbons atoms, that is a radical of an alkane and includes straight-chain and branched organic groups. As such, a *"C₁-C₃₀alkyl"* group refers to a monovalent group that contains from 1 to 30 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. Where applicable, a preference for a given substituent will be noted in the specification. In general, however, a preference for alkyl groups containing from 1-18 carbon atoms (C₁-C₁₈ alkyl) - for example alkyl groups containing from 1 to 12 carbon atoms (C₁-C₁₂ alkyl) or from 1 to 6 carbon atoms (C₁-C₆ alkyl) - should be noted.

The term "*C₁*-*C₁₈ hydroxyalkyl"* as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term "*C₁*-*C₁₈ alkoxyalkyl"* as used herein refers to an alkyl group having an alkoxy substituent as defined above and wherein the moiety (*alkyl*-O-*alkyl*) comprises in total from 1 to 18 carbon atoms: such groups include methoxymethyl (-CH₂OCH₃), 2-methoxyethyl (-CH₂CH₂OCH₃) and 2-ethoxyethyl.

The term "*C₂*-*C₄ alkylene"* as used herein, is defined as saturated, divalent hydrocarbon radical having from 2 to 4 carbon atoms.

The term "*C₃* -*C₃₀ cycloalkyl"* is understood to mean an optionally substituted, saturated, mono-, bi- or tricyclic hydrocarbon group having from 3 to 30 carbon atoms. In general, a preference for cycloalkyl groups containing from 3-18 carbon atoms (C₃-C₁₈ cycloalkyl groups) should be noted. Examples of cycloalkyl groups include: cyclopropyl; cyclobutyl; cyclopentyl; cyclohexyl; cycloheptyl; cyclooctyl; adamantane; and, norbornane.

As used herein, an "*C₆*-*C₁₈ aryl"* group used alone or as part of a larger moiety - as in *"aralkyl group"* - refers to optionally substituted, monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*C₂*-*C₂₀ alkenyl"* refers to hydrocarbyl groups having from 2 to 20 carbon atoms and at least one unit of ethylenic unsaturation. The alkenyl group can be straight chained, branched or cyclic and may optionally be substituted. The term *"alkenyl"* also encompasses radicals having *"cis"* and *"trans"* configurations, or alternatively, "E" and "Z" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂-C₁₂ alkenyl groups include, but are not limited to: -CH=CH₂; -CH=CHCH₃; -CH₂CH=CH₂; -C(=CH₂)(CH₃); -CH=CHCH₂CH₃; - CH₂CH=CHCH₃; -CH₂CH₂CH=CH₂; -CH=C(CH₃)₂; -CH₂C(=CH₂)(CH₃); -C(=CH₂)CH₂CH₃; - C(CH₃)=CHCH₃; -C(CH₃)CH=CH₂; -CH=CHCH₂CH₂CH₃; -CH₂CH=CHCH₂CH₃, - CH₂CH₂CH=CHCH₃; -CH₂CH₂CH₂CH=CH₂; -C(=CH₂)CH₂CH₂CH₃; -C(CH₃)=CHCH₂CH₃; - CH(CH₃)CH=CHCH; -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, *"alkylaryl"* refers to alkyl-substituted aryl groups and *"substituted alkylaryl"* refers to alkylaryl groups further bearing one or more substituents as set forth above. Further, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide resin may be unsubstituted but may also be inertly substituted. Exemplary inert substituents include chlorine, bromine, fluorine and phenyl.

The term *"equivalent weight"* as used herein refers to the molecular weight divided by the number of a function concerned. As such, *"epoxy equivalent weight'* (EEW) means the weight of resin, in grams, that contains one equivalent of epoxy.

The molecular weights referred to in this specification can be measured with gel permeation chromatography (GPC) using polystyrene calibration standards, such as is done according to ASTM 3536.

Viscosities of the compositions described herein are, unless otherwise stipulated, measured using the Anton Paar Viscometer, Model MCR 301 at standard conditions of 25°C and 50% Relative Humidity (RH). The viscometer is calibrated one time a year and checked by services. The calibration is done with using special oil of known viscosity, which vary from 5,000 cps to 50,000 cps (parallel plate PP25 and at shear rate 1 1/s at 23°C). Measurements of the compositions according to the present invention are done using the parallel plate PP20 at different shear rates from 1.5 1/s to 100 1/s.

### DETAILED DESCRIPTION OF THE INVENTION

The present invention relates to an adhesive sheet for use in e-battery bonding comprising: a first electrically conductive foil; a second electrically conductive foil; and an electrically conductive and debondable 2K epoxy adhesive composition comprising a first part comprising: a) an epoxy resin; b) an electrolyte; c) an electrically conductive filler; and d) an electrically non-conductive filler; a second part comprising: a curing agent; an electrically non-conductive filler and, c) an accelerator; wherein the electrically conductive and debondable 2K epoxy adhesive composition is disposed between the first and second conductive foils.

The adhesive sheet according to the present invention allows the electrical debonding of adhered structures consisting of two non-conductive surfaces being adhered together by one or more structural adhesives. This is particularly useful in electric vehicles and battery applications, wherein the battery module or cell is wrapped or coated with an electrically insulating material and is bonded to a non-electrically conductive second substrate e.g. e-coated frame and/or plate.

The adhesive sheet according to the present invention enables repair, repurpose, reuse and recycling of the battery modules and cells.

The adhesive sheet according to the present invention comprises a first electrically conductive foil, and a second electrically conductive foil.

The first and second electrically conductive foils maybe same or different and independently selected from the group consisting of aluminium foil, copper foil, silver foil, gold foil, graphite, carbon, and carbon nanotubes.

Thickness of the first and second electrically conductive foil may be from 30 to 100µm, preferably from 35 to 80 µm, and more preferably from 40 to 60 µm and even more preferably from 45 to 55µm.

Commercially available non-limiting example of a electrically conductive foil for use in the present invention is aluminium foil from Alcan Aluminium Limited.

### FIRST PART OF THE TWO-PART (2K) COMPOSITION

The first part of the two-part (2K) composition comprises: an epoxy resin, an electrolyte, an electrically conductive filler and an electrically non-conductive filler.

### Epoxy Resin

The first part of the composition comprises epoxy resin which will typically be present in an amount of from 30 to 70% by weight of the first part of the composition, preferably from 35 to 60%, more preferably from 40 to 55% and even more preferably from 45 to 52%.

These epoxy resin quantities are preferred because quantity greater than 70% may adversely affect lap shear strength and debonding effect, whereas low quantities, mainly below 30% may lead to decrease in adhesive properties.

Epoxy resins as used herein may include mono-functional epoxy resins, multi- or poly-functional epoxy resins, and combinations thereof. The epoxy resins may be pure compounds but equally may be mixtures epoxy functional compounds, including mixtures of compounds having different numbers of epoxy groups per molecule. An epoxy resin may be saturated or unsaturated, aliphatic, cycloaliphatic, aromatic or heterocyclic and may be substituted. Further, the epoxy resin may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (I) herein below: 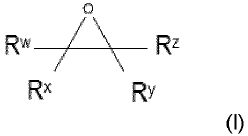 wherein: R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide *(propylene oxide);* 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present invention, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present invention, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a cost standpoint, as in their production, lower molecular weight epoxy resins require more limited processing in purification.

As examples of types or groups of polyepoxide compounds which may be polymerized in present invention, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1 ,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

In a highly preferred embodiment the epoxy resin is selected from the group consisting of bis-phenol A epoxy resin, bis-phenol F epoxy resin, mixture of bis-phenol A epoxy resin and bis-phenol F epoxy resin, cycloaliphatic epoxy resin and mixtures thereof, preferably said epoxy resin is bis-phenol A epoxy resin.

And examples of highly preferred polyepoxide compounds include: bisphenol-A epoxy resins, such as DER^{™} 331, DER^{™} 330 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

The above aside, the first part of the composition can in certain embodiments comprise glycidoxy alkyl alkoxy silanes having the formula: 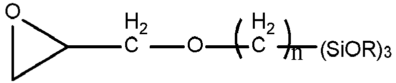 wherein:
each R is independently selected from methyl or ethyl; and,
n is from 1-10.

Exemplary silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than less than 20 wt.%, preferably less than 10 wt.% or less than 5 wt.%, based on the total weight of the epoxide compounds.

The present invention also does not preclude the first part of the curable compositions from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of the epoxide compounds.

### Electrolyte

The first part of the composition comprises from 1 to 10% by weight of the total weight of first part of the composition, preferably from 3 to 9% more preferably from 4 to 8%.

These electrolyte quantities are preferred because quantity greater than 10% may lead to a good debonding effect, however the cure may be incomplete and therefore, initial adhesive properties may be adversely affected, whereas low quantities, mainly below 1 %, may lead to a lack of debonding effect.

The electrolyte preferably comprises at least one salt having a Formula selected from the group consisting of: 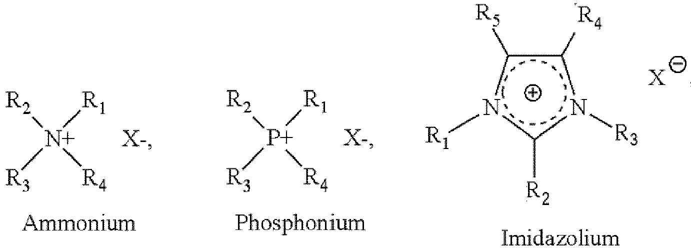 wherein: R¹, R², R³, R⁴, R⁵ and R⁶ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN and -NO₂; and, R^{q} is C₁-C₆ alkyl.

For completeness, the terms C₁-C₁₈ alkyl, C₃-C₁₈ cycloalkyl, C₆-C₁₈ aryl, C₇-C₂₄ aralkyl, C₂-C₂₀ alkenyl expressly includes groups wherein one or more hydrogen atoms are substituted by halogen atoms (e.g. C₁-C₁₈ haloalkyl) or hydroxyl groups (e.g. C₁-C₁₈ hydroxyalkyl). In particular, it is preferred that R¹, R², R³, R⁴, R⁵ and R⁶ are independently selected from hydrogen, C₁-C₁₂ alkyl, C₁-C₁₂ haloalkyl, C₁-C₁₂ hydroxyalkyl and C₃-C₁₂ cycloalkyl. For example, R¹, R², R³, R⁴, R⁵ and R⁶ may be independently selected from hydrogen, C₁-C₆ alkyl, C₁-C₆ haloalkyl and C₁-C₆ hydroxyalkyl.

There is no particular intention to limit the counter anion (X-) which may be employed in the electrolyte. Exemplary anions may be selected from:
- Halides;
- Pseudohalides and halogen-containing compounds of the formulae PF₆ ⁻, CF₃SO₃ ⁻, (CF₃SO₃)₂N⁻, CF₃CO₂ ⁻ and CCl₃CO₂ ⁻,
- CN⁻, SCN⁻ and OCN⁻;
- Phenates;
- Sulfates, sulfites and sulfonates of the general formulae SO₄ ²⁻, HSO₄ ⁻, SO₃ ²⁻, HSO₃ ⁻, R^{a}OSO₃ ⁻ and R^{a}SO₃ ⁻;
- Phosphates of the general formulae PO₄ ³⁻, HPO₄ ²⁻, H₂PO₄ ⁻, R^{a}PO₄ ²⁻, HR^{a}PO₄ ⁻ and R^{a}R^{b}PO₄ ⁻;
- Phosphonates and phosphinates of the general formulae R^{a}HPO₃ ⁻,R^{a}R^{b}PO₂ ⁻ and R^{a}R^{b}PO₃ ⁻;
- Phosphites of the general formulae: PO₃ ³⁻, HPOs ²⁻, H₂PO₃ ⁻, R^{a}PO₃ ²⁻, R^{a}HPO₃ - and R^{a}R^{b}PO₃ ⁻;
- Phosphonites and phosphinites of the general formulae R^{a}R^{b}PO₂ ⁻, R^{a}HPO₂ ⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃ ³⁻, HBOs ²⁻, H₂BO₃ ⁻, R^{a}R^{b}BO₃ ⁻, R^{a}HBO₃ ⁻, R^{a}BO₃ ²⁻, B(OR^{a})(OR^{b})(OR^{c})(OR^{d})⁻, B(HSO₄)⁻ and B(R^{a}SO₄)⁻;
- Boronates of the general formulae R^{a}BO₂ ²⁻ and R^{a}R^{b}BO⁻;
- Carbonates and carbonic acid esters of the general formulae HCOs ⁻, COs ²⁻ and R^{a}CO₃ ⁻;
- Silicates and silicic acid esters of the general formulae SiO₄ ⁴⁻, HSiO₄ ³⁻, H₂SiO₄ ²⁻, H₃SiO₄ ⁻, R^{a}SiO₄ ³⁻, R^{a}R^{b}SiO₄ ²⁻, R^{a}R^{b}R^{c}SiO₄ ⁻, HR^{a}SiO₄ ²⁻, H₂R^{a}SiO₄ ⁻ and HR^{a}R^{b}SiO₄ ⁻;
- Alkyl- and arylsilanolates of the general formulae R^{a}SiO₃ ³⁻, R^{a}R^{b}SiO₂ ²⁻, R^{a}R^{b}R^{c}SiO⁻, R^{a}R^{b}R^{c}SiO₃ ⁻, R^{a}R^{b}R^{c}SiO₂ ⁻ and R^{a}R^{b}SiO₃ ²⁻;
- Pyridinates and pyrimidinates;
- Carboxylic acid imides, bis(sulfonyl)imides and sulfonylimides of the general formulae: 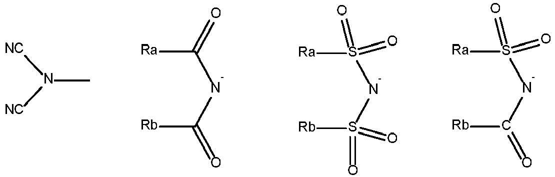
- Methides of the general formula: 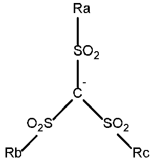
- Alkoxides and aryloxides of the general formula R^{a}O⁻; and,
- Sulfides, hydrogen sulfides, polysulfides, hydrogen polysulfides and thiolates of the general formulae S²⁻, HS⁻, [Sᵥ]²⁻, [HSᵥ]⁻ and [R^{a}S]⁻
in which general formulae
v is a whole positive number of from 2 to 10.
R^{a}, R^{b}, R^{c} and R^{d} are independently selected from hydrogen, a C₁-C₁₂ alkyl, C₅-C₁₂ cycloalkyl, C₅-C₁₂ heterocycloalkyl, C₆-C₁₈ aryl and C₅-C₁₈ heteroaryl.

Based on the definitions in the above list, preferred anions are selected from the group consisting of: halides; pseudohalides and halogen-containing compounds as defined above; carboxylic acid anions, in particular formate, acetate, propionate, butyrate and lactate; hydroxycarboxylic acid anions; pyridinates and pyrimidinates; carboxylic acid imides, bis(sulfonyl)imides and sulfonylimides; sulfates, in particular methyl sulfate and ethyl sulfate; sulfites; sulfonates, in particular methansulfonate; and, phosphates, in particular dimethyl-phosphate, diethyl-phosphate and di-(2-ethylhexyl)-phosphate.

In a highly preferred embodiment, the electrolyte may be selected from the group consisting of tetradecyltrihexylphosphonium decanoate, 1-ethyl-3-methylimidazolium methansulfonate, 1-ethyl-3-methylimidazolium methyl sulfate, tetrabutylphosphonium tris (pentafluoroethyl) trifluorophosphate, N,N-dimethyl (2-hydroxyethyl) ammonium octanoate, and mixtures thereof, preferably the electrolyte is tetradecyltrihexylphosphonium decanoate.

Above listed electrolytes are preferred because they provide good stability for the composition and provide good initial adhesion strength, and upon treatment with potential they provide good debonding effect.

### Electrically non-conductive fillers

The electrically non-conductive fillers are present in both the first and second parts of the electrically conductive and debondable 2K epoxy adhesive composition. The electrically non-conductive fillers may be same or different in the first and second parts.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average volume particle size, as measured by laser diffraction / scattering methods, of from 0.1 to 1500 µm, for example from 1 to 1000 µm or from 1 to 500 µm.

Exemplary non-conductive fillers include but are not limited to calcium carbonate, calcium oxide, calcium hydroxide (lime powder), precipitated and/or pyrogenic silicic acid, zeolites, bentonites, wollastonite, magnesium carbonate, diatomite, barium sulfate, alumina, clay, talc, sand, quartz, flint, talcum, mica, glass beads, glass powder, fumed silica, and other ground mineral substances. Short fibers such as glass fibers, glass filament, polyacrylonitrile, carbon fibers, or polyethylene fibers can also be added.

In a highly preferred embodiment, the non-conductive fillers may be independently selected to the first and second parts from the group consisting of calcium carbonate, calcium oxide, talcum, fumed silica, silica, wollastonite, barium sulphate, glass beads and mixtures thereof.

The pyrogenic and/or precipitated silicic acids advantageously have a BET surface area from 10 to 90 m²/g. When they are used, they do not cause any additional increase in the viscosity of the composition according to the present invention but do contribute to strengthening the cured composition.

Hydrophobicity may be required by the electrolyte for it to be dissolved into the composition and to avoid phase separation. Non-conductive fillers, and especially fumed silica, provide required hydrophobicity to the composition, and therefore, improve solubility of the electrolyte and prevent phase separation. Further, the technical data indicates that the presence of a non-electrically conductive filler improves the initial adhesive properties of the composition.

It is likewise conceivable to use pyrogenic and/or precipitated silicic acids having a higher BET surface area, advantageously from 100 to 250 m²/g as a filler: because of the greater BET surface area, the effect of strengthening the cured composition is achieved with a smaller proportion by weight of silicic acid.

Also suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less preferably from 100 to 200 µm.

Non-conductive fillers which impart thixotropy to the composition may be preferred for many applications: such fillers are also described as rheological adjuvants, e.g. hydrogenated castor oil, fatty acid amides, or swellable plastics such as PVC.

The desired viscosities of each part of the composition independently and also the desired viscosity of the curable composition formed upon bringing the two parts together may be determinative of the amount of filler used. Having regard to that latter consideration, the total amount of fillers - both electrically conductive and non-conductive - present in the compositions should not prevent the composition from being readily extrudable from a suitable dispensing apparatus, such as a tube: conventionally such extrudable curable compositions should possess a viscosity of from 3000 to 150,000, preferably from 40,000 to 80,000 mPas, or even from 50,000 to 60,000 mPas.

The first part of the composition may comprise the electrically non-conductive fillers from 30 to 50% by weight of the total weight of the first part of the composition, preferably from 32 to 45%, and more preferably from 33 to 40%.

The second part of the composition may comprise the electrically non-conductive fillers from 40 to 65% by weight of the total weight of the second part of the composition, preferably from 43 to 60%, and more preferably from 45 to 55%.

These electrically non-conductive filler quantities are preferred because too high quantities may lead to inadequate adhesion properties, whereas too low quantities may lead to inadequate adhesion properties and viscosity issues.

### Electrically Conductive Fillers

The electrically conductive fillers are present in the first part of the electrically conductive and debondable 2K epoxy adhesive composition.

Broadly, there is no particular intention to limit the shape of the particles employed as conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as conductive fillers. However, such conductive fillers will conventionally have an average volume particle size, as measured by laser diffraction / scattering methods, of from 1 to 500 µm, for example from 1 to 200 µm.

Exemplary conductive fillers include, but are not limited to: silver; copper; gold; palladium; platinum; nickel; gold or silver-coated nickel; carbon black; carbon fibre; graphite; aluminium; indium tin oxide; silver coated copper; silver coated aluminium; metallic coated glass spheres; metallic coated filler; metallic coated polymers; silver coated fibre; silver coated spheres; antimony doped tin oxide; conductive nanospheres; nano silver; nano aluminium; nano copper; nano nickel; carbon nanotubes; and, mixtures thereof.

In a highly preferred embodiment, the electrically conductive filler is selected from the group consisting of carbon black, carbon nanostructure, silver and mixtures thereof.

The electrically conductive fillers should be included in the composition in an amount of from 0.01 to 2% by weight of the total weight of the first part of the composition. Preferably the composition comprises electrically conductive fillers from 0.02 to 1%, and more preferably from 0.05 to 0.5%

These electrically conductive particle quantities are preferred because quantity greater than 2% may increase the conductivity, but at the same time adversely affect adhesion and debonding properties, whereas low quantities, mainly below 0.01% may lead no physical effect.

### Solubilizer

The first part of the two-part (2K) composition may comprise a solubilizer which will typically be present in an amount of from 0.5 to 15%, by weight of the total weight of the first part of the composition, preferably the solubilizer constitutes from 1.5 to 10%, for example from 3 to 10% of said composition.

These solubilizer quantities are preferred because quantity greater than 15% may adversely affect adhesion and cure properties, whereas low quantities, mainly below 0.5% may lead the composition being more viscose/solid, and therefore, hinder blending of the ingredients.

The solubilizer has the function of promoting the miscibility of the electrolyte within the adhesive composition formed upon admixture of the two parts thereof: the solubilizer may or may not form part of the polymer matrix formed upon curing of the adhesive composition but does serve to facilitate ion transfer therein. The solubilizer is, as such, preferably a polar compound and should desirably be liquid at room temperature.

Suitable classes of solubilizer include: polyphosphazenes; polymethylenesulfides; polyoxyalkylene glycols; polyethylene imines; silicone surfactants and fluorinated silicone surfactants, such as fluorinated polysilanes, polyalkylsiloxane and polyoxyalkylene modified polydimethylsiloxanes; co-polymers of functionalized polyalkysiloxanes and epoxy resins, such as copolymers of polydimethylsiloxane (PDMS) and epoxy resin; polpolyhydric alcohols; and, sugars.

Polyhydric alcohols and sugars such as ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, di(trimethylolpropane), trimethylolpropane ethoxylate, 2-hydroxymethyl-1,3-propanediol, pentaerythritol allyl ether and pentaerythritol.

Of the polyoxyalkylene glycols, a particular preference for the use of polyoxy(C₂-C₃)alkylene glycols having a weight average molecular weight of from 200 to 10000 g/mol, for example 200 to 2000 g/mol, may be noted.

### SECOND PART OF THE TWO-PART (2K) COMPOSITION

The second part of the two-part composition necessarily comprises: a curing agent; an electrically non-conductive filler and, an accelerator.

### Curing Agent

The two-part (2K) composition according to the present invention comprises a curing agent. The curing agent necessarily consists of at least one compound possessing at least two epoxide reactive groups per molecule.

The composition according to the present invention comprise at least one compound which has at least two reactive mercapto- groups per molecule. Suitable mercapto-group containing compounds, which may be used alone or in combination, include but are not limited to the following.
- Liquid mercaptan-terminated polysulfide polymers of which commercial examples include: Thiokol^{®} polymers (available from Morton Thiokol), in particular the types LP-3, LP-33, LP-980, LP-23, LP-55, LP-56, LP-12, LP-31, LP-32 and LP-2 thereof; and, Thioplast^{®} polymers (from Akzo Nobel), in particular the types G10, G112, G131, G1, G12, G21, G22, G44 and G 4.
- Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.

A preference for the use of polyesters of thiocarboxylic acids is acknowledged.

The curing agent according to the present invention comprises a polyester of thiocarboxylic acids, preferably selected from the group consisting of pentaerythritol tetramercapto-acetate (PETMP), trimethylolpropane trimercaptoacetate (TMPMP), glycol dimercaptoacetate, and mixtures thereof, preferably the curing agent is trimethylolpropane trimercaptoacetate (TMPMP).

The second part of the two-part (2K) composition comprises a curing agent which may be present in an amount of from 30 to 60%, by weight of the total weight of the second part of the composition, preferably the curing agent constitutes from 32 to 50%, for example from 34 to 41% of said composition.

### Accelerator

The two-part (2K) composition according to the present invention comprises an accelerator.

Suitable accelerators are substances that promote the reaction between the epoxide groups and the epoxide-reactive groups, for instance the reaction between the amine or thiol groups and the epoxide groups.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

The accelerator according to the present invention may be an amine-epoxy adduct.

The accelerator should typically be present in the composition in an amount of from 0.1 to 10%, based on the weight of the second part of the composition: the accelerator may preferably constitute from 0.5 to 5 %, for example from 0.75 to 3% of said composition.

These accelerator quantities are preferred because quantity greater than 10% may lead to an excess of accelerator in a composition, which may adversely affect cure process and adhesive properties, whereas low quantities, mainly below 0.1%, may lead no physical effect.

### Tougheners

The presence of tougheners in one or both parts of the present composition can be advantageous. In particular, the first part of the composition of the present invention should preferably contain at least one toughener selected from: epoxy- elastomer adducts; and, toughening rubber in the form of core-shell particles dispersed in the epoxy resin matrix.

Elastomer-containing adducts may be used individually or a combination of two or more particular adducts might be used. Moreover, each adduct may independently be selected from solid adducts or liquid adducts at a temperature of 23°C. Typically, useful adducts will be characterized by a ratio by weight of epoxy to elastomer of from 1:5 to 5:1, for example from 1:3 to 3:1. And an instructive reference regarding suitable epoxy / elastomer adducts is US Patent Publication 2004/0204551. Moreover, exemplary commercial epoxy/elastomer adducts for use herein include but are not limited to: HYPDX RK8-4 commercially available from CVC Chemical; and, B-Tough A3 available from Croda Europe Limited.

The term "core *shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50% of the core-shell rubber particle.

The polymeric material of the core should have a glass transition temperature (T_{g}) of no greater than 0°C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an average particle size (d50) of from 10nm to 300nm, for example from 50 nm to 250 nm: said particle size refers to the diameter or largest dimension of a particle in a distribution of particles and is measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

*In toto* tougheners should be included in the composition in an amount of from 0 to 15%, for example in an amount of from 1 to 10%, based on the total weight of the composition. In an alternative expression of preference, which is not intended to be mutually exclusive of that mentioned above, tougheners should *in toto* constitute from 0 to 20%, preferably from 2 to 15% of the first part of the composition.

These toughener quantities are preferred because quantity greater than 15% may lead to inadequate adhesion properties, whereas low quantities, mainly below 1%, may lead to inadequate debonding effect and a composition may be too flexible.

### Additives and Adjunct Ingredients

The compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives - which independently of one another may be included in single parts or both parts of a two (2K) part composition - are: plasticizers; stabilizers including UV stabilizers; antioxidants; reactive diluents; drying agents; adhesion promoters; fungicides; flame retardants; rheological adjuvants; color pigments or color pastes; and/or optionally also, to a small extent, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 50% of the total composition and preferably should not comprise more than 20% of the composition.

For completeness, it is noted that, in general, adjunct materials and additives which contain reactive groups will be blended into the appropriate part of the two (2K) part composition to ensure the storage stability thereof. Unreactive materials may be formulated into either or both of the two parts.

A *"plasticizer"* for the purposes of this invention is a substance that decreases the viscosity of the composition and thus facilitates its processability. Herein the plasticizer may constitute up to 10% or up to 5%, based on the total weight of the composition, and is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this invention are to be understood as antioxidants, UV stabilizers, thermal stabilizers or hydrolysis stabilizers. Herein stabilizers may constitute *in toto* up to 10% or up to 5%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

In order to enhance shelf life even further, it is often advisable to further stabilize the compositions of the present invention with respect to moisture penetration through using drying agents. A need also occasionally exists to lower the viscosity of an adhesive or sealant composition according to the present invention for specific applications, by using reactive diluent(s). The total amount of reactive diluents present will typically be from 0 to 15%, for example from 0.01 to 5 %, based on the total weight of the composition.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said non-reactive diluents constitute *in toto* less than 10%, in particular less than 5% or less than 2%, based on the total weight of the composition.

### Illustrative Embodiment of the Two-Part (2K) Composition

In an exemplary embodiment of the present invention, the adhesive sheet for use in e-battery bonding comprising:
a first electrically conductive aluminium foil;
a second electrically conductive aluminium foil; and
an electrically conductive and debondable 2K epoxy adhesive composition comprising
   a first part comprising:
      a) from 30 to 70% of an epoxy resin, preferably from 45 to 52%;
      b) from 1 to 10% of an electrolyte, preferably from 4 to 8%;
      c) from 0.01 to 2% of an electrically conductive filler, preferably from 0.05 to 0.5%; and
      d) from 30 to 50% of an electrically non-conductive filler, preferably from 33 to 40%;
   a second part comprising:
      a) from 30 to 60% of a curing agent, preferably from 34 to 41%;
      b) from 40 to 65% of an electrically non-conductive filler, preferably from 45 to 55% and,
      c) from 0.1 to 10% of an accelerator, preferably from 0.75 to 3%;
wherein the electrically conductive and debondable 2K epoxy adhesive composition is disposed between the first and second conductive aluminium foils.

### METHODS AND APPLICATIONS

To form the defined adhesive sheet, the two-part (2K) curable compositions are formed by bringing the reactive parts together and mixed in such a manner as to induce the hardening thereof. The reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; speed mixer; batch mixers; planetary mixers; C.W. Brabender or Banburry^{®} style mixers; and, high shear mixers, such as blade-style blenders and rotary impellers.

For small-scale applications in which volumes of less than 2 litres will generally be used, the preferred packaging for the two part (2K) compositions will be side-by-side double cartridges or coaxial cartridges, in which two tubular chambers - typically of equal volume - are arranged alongside one another or inside one another and are sealed with pistons: the driving of these pistons allows the parts to be extruded from the cartridge, advantageously through a closely mounted static or dynamic mixer. For larger volume applications, the two parts of the composition may advantageously be stored in drums or pails: in this case the two parts are extruded via hydraulic presses, in particular by way of follower plates, and are supplied via pipelines to a mixing apparatus which can ensure fine and highly homogeneous mixing of the two parts. In any event, for any package it is important that the parts be disposed with an airtight and moisture-tight seal, so that both parts can be stored for a long time, ideally for 12 months or longer.

Non-limiting examples of two part dispensing apparatuses and methods that may be suitable for the present invention include those described in U.S. Patent No. 6,129,244 and US Patent No. 8,313,006.

The first and second parts of the composition will conventionally be mixed in amounts by weight which achieve the desired ratio of epoxide groups to epoxide-reactive groups. By way of example, the ratio by weight of said first part to said second part may be in the range from 5:1 to 1:5, preferably 1:1.

Where applicable, the two (2K) part curable compositions should broadly be formulated to exhibit an initial viscosity - determined immediately after mixing, for example, up to two minutes after mixing - of less than 200000 mPa s, for instance less than 100000 mPa.s, at 25°C. Independently of or additional to said viscosity characteristics, the two (2K) part composition should be formulated to be bubble (foam) free upon mixing and subsequent curing.

In accordance with the broadest process aspects of the present invention, the above-described compositions are applied to the first electrically conductive foil and the second electrically conductive foil is placed top of the composition and then cured *in situ.*

The compositions are applied to the first electrically conductive foil by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray.

It is recommended that the electrically conductive and debondable 2K epoxy adhesive composition to be applied to a surface of the first electrically conductive foil at a wet film thickness of from 30 to 500µm, preferable from 50 to 300 µm, and more preferrable from 80 to 200µm. The application of thinner layers within this range is more economical and provides for a reduced likelihood of deleterious thick cured regions. However, great control must be exercised in applying thinner coatings or layers so as to avoid the formation of discontinuous cured films.

The present invention is also directed to a bonded structure comprising a first material layer (electrically non-conductive); a first structural adhesive; a second structural adhesive; a second material layer (electrically non-conductive); wherein a cured adhesive sheet as defined in the present invention is disposed between the first and second structural adhesives, and wherein the first structural adhesive is on a surface of the first material layer and the second structural adhesive is on a surface of the second material layer.

The first and second material layers are non-conductive material and may be same or different and may be independently selected from the group consisting of e-coated steel, coated aluminium, reinforced plastic materials.

The first structural adhesive and the second structural adhesive can be the same or different and not limited any particular structural adhesive.

The structural adhesive may be 1K or 2K adhesive composition, and may be for example an epoxy adhesive, a polyurethane adhesive, or an (meth)acrylate adhesive.

Commercially available non-limiting example of a structural adhesive for use in the present invention is 2K epoxide resin based TEROSON EP 5065 from Henkel AG & Co. KGaA.

It is recommended that the structural adhesives to be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

It is recommended that the electrically conductive and debondable 2K adhesive composition to be applied to a surface of the first electrically conductive foil at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions according to the invention typically occurs at temperatures in the range of from 40°C to 200°C, preferably from 50°C to 175°C, and in particular from 75°C to 175°C. The temperature that is suitable depends on the specific compounds present and the desired curing rate and can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective parts of a two (2K) part composition may be raised above the mixing temperature and / or the application temperature using conventional means including microwave induction.

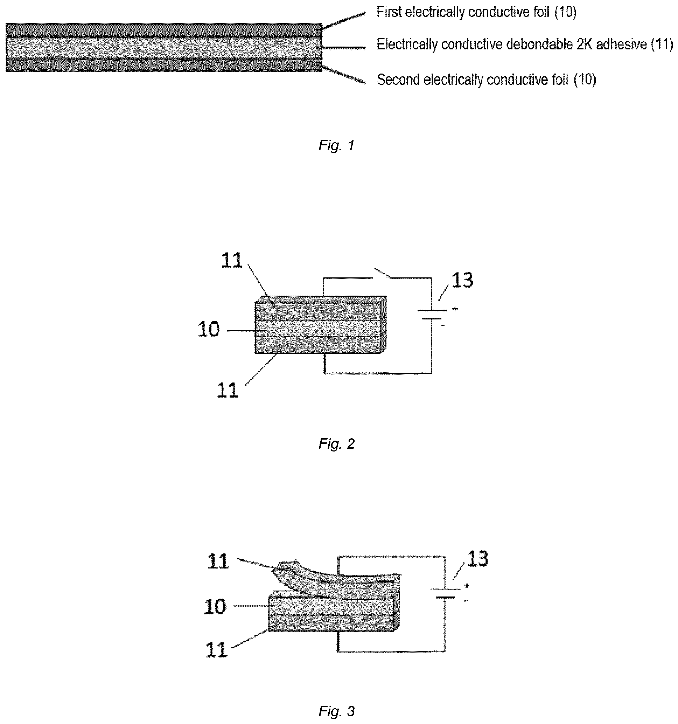

Figure 1 illustrates an adhesive sheet in which a layer of 2K adhesive (10) is disposed between two electrically conductive foils (11). In figure 2 each layer of electrically conductive foil (11) is in electrical contact with an electrical power source (13) which may be a battery or an AC-driven source of direct current (DC). The positive and negative terminals of that power source (13) are shown in one fixed position but the skilled artisan will of course recognize that the polarity of the system can be reversed.

Figure 3 illustrates how the debonding occurs at the positive interface, that interface between the adhesive composition (10) and the electrically conductive surface (11) that is in electrical contact with the positive electrode. By reversing current direction prior to separation of the substrates, the adhesive bond may be weakened at both substrate interfaces.

It is however noted that the composition of the 2K adhesive layer (10) may be moderated so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously disbond both substrate / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source. Without intention to limit the present invention, it is considered that the debonding operation may be performed effectively where at least one and preferably both of the following conditions are instigated: a) an applied voltage of from 0.5 to 200 V; and, b) the voltage being applied for a duration of from 1 second to 120 minutes, for example from 1 second to 60 minutes or 1 second to 30 minutes. Where the release of the adhesive sheet from the cured adhesive is to be facilitated by the application of a force - exerted via a weight or a spring, for instance - the potential might only need to be applied for the order of seconds.

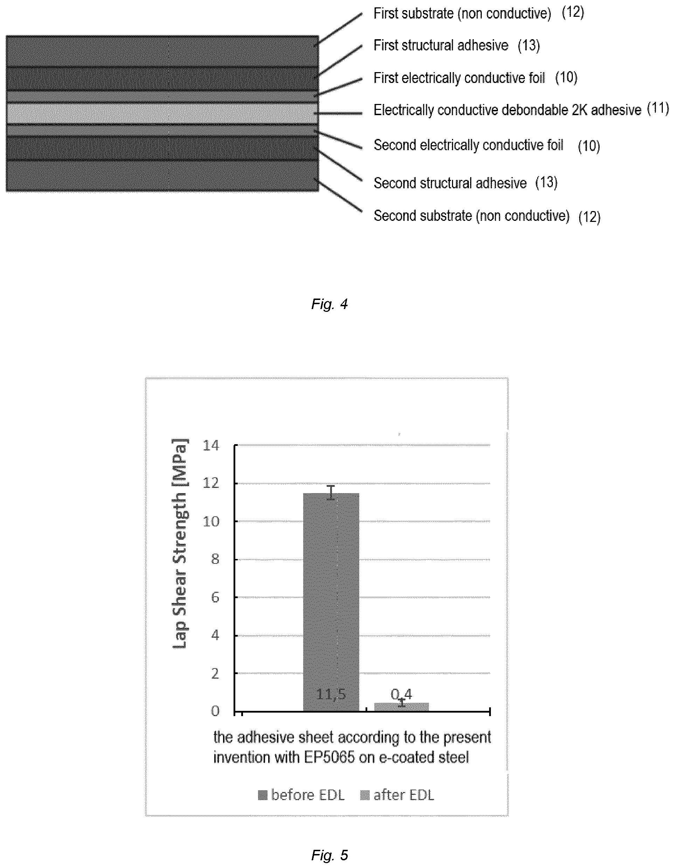

Figure 4 illustrates the bonded structure according to the present invention. First and second material layers (12) and first and second structural adhesives (13) are both sides of the adhesive sheet according to the present invention. Debonding of the bonded structure occurs around the bonded sheet according to the present invention as described above for figures 2 and 3.

The following examples are illustrative of the present invention and are not intended to limit the scope of the invention in any way.

### EXAMPLES

Examples according to the present invention were prepared and tested. Tables below illustrates the first and second parts of the electrically conductive and debondable 2K composition according to the present invention.

Debonding effect was measured.
First part

| Component | % |
|---|---|
| DER 331 from Olin | 48.228 |
| PREMIX 188182 PM-182 | 0.502 |
| Silquest A-187 from Momentive | 2 |
| CYPHOS IL 169 from Solvay | 6 |
| AEROSIL ^{®} R 202 from Evonik | 1 |
| Luzenac 2 from Imerys | 4.753 |
| Omyacarb 4 HD from Omya | 37.417 |
| GPX801 from Cabot | 0.1 |
| Total | 100 |

Second part

| Component | % |
|---|---|
| TMPMP from EVANS CHEMETICS LP | 37.142 |
| AJICURE PN-H from AJINOMOTO | 1.760 |
| Aerosil^{®} R 202 from Evonik | 1 |
| OMYACARB 4 HD from Omya | 50.137 |
| Luzenac 2 from Imerys | 0.961 |
| TOTAL | 100 |

First and second parts were mixed in 1:1 ratio.

A layer (thickness of 200 µm) of the electrically conductive and debondable 2K epoxy adhesive was applied onto a surface of a first aluminium foil (thickness of 50 µm) from Alcan Aluminium Limited and subsequently a second aluminium foil (thickness of 50 µm) from Alcan Aluminium Limited is placed top of the adhesive layer.

The adhesive sheet was cured at room temperature. Alternatively shorter cure time may be obtained by using elevated temperature up to 80 °C.

A bonded structure was prepared by having two e-coated steel plates as the first and second material layer. Layer (thickness of 1 mm) of structural adhesive TEROSON EP 5065 from Henkel AG & Co. KGaA was applied on the surface of both first and second material layer. The above prepared adhesive sheet according to the present invention was placed between these layers and cured accoridngly. The first and second material layers have 250 mm² overlapping area forming the bonded structure.

Tensile lap shear (TLS) was measured according to EN 1465:2009 (German version) *Based on Adhesives* - *Determination of tensile lap-shear strength of bonded assemblies* at room temperature.

The adhesive sheet according to the present invention was debondable while the initial bond strength was reduced by more than 50%. These results are illustrated in figure 5.

## Claims

1. An adhesive sheet for use in e-battery bonding comprising:
a first electrically conductive foil;
a second electrically conductive foil; and
an electrically conductive and debondable 2K epoxy adhesive composition comprising
a first part comprising:
a) an epoxy resin;
b) an electrolyte;
c) an electrically conductive filler; and
d) an electrically non-conductive filler;
a second part comprising:
c) a curing agent;
d) an electrically non-conductive filler and,
c) an accelerator;
wherein the electrically conductive and debondable 2K epoxy adhesive composition is disposed between the first and second conductive foils.

2. The adhesive sheet according to claim 1, wherein the first and second electrically conductive foils maybe same or different and independently selected from the group consisting of aluminium foil, copper foil, silver foil, gold foil, graphite, carbon, and carbon nanotubes.

3. The adhesive sheet according to claim 1 or 2, wherein thickness of the first and second electrically conductive foil is from 30 to 100µm, preferably from 35 to 80 µm, and more preferably from 40 to 60 µm and even more preferably from 45 to 55µm.

4. The adhesive sheet according to any of claims 1 to 3, wherein the epoxy resin is selected from the group consisting of bis-phenol A epoxy resin, bis-phenol F epoxy resin, mixture of bis-phenol A epoxy resin and bis-phenol F epoxy resin, cycloaliphatic epoxy resin and mixtures thereof, preferably said epoxy resin is bis-phenol A epoxy resin.

5. The adhesive sheet according to any of claims 1 to 4, wherein the epoxy resin is present in an amount of from 30 to 70% by weight of the first part of the composition, preferably from 35 to 60%, more preferably from 40 to 55% and even more preferably from 45 to 52%.

6. The adhesive sheet according to any one of claims 1 to 5, wherein the electrolyte is tetradecyltrihexylphosphonium decanoate, 1-ethyl-3-methylimidazolium methansulfonate, 1-ethyl-3-methylimidazolium methyl sulfate, tetrabutylphosphonium tris (pentafluoroethyl) trifluorophosphate, N,N-dimethyl (2-hydroxyethyl) ammonium octanoate, and mixtures thereof, preferably the electrolyte is tetradecyltrihexylphosphonium decanoate.

7. The adhesive sheet according to any one of claims 1 to 6, wherein the electrolyte is present in an amount of from 1 to 10% by weight of the total weight of first part of the composition, preferably from 3 to 9% more preferably from 4 to 8%.

8. The adhesive sheet according to any one of claims 1 to 7, wherein the electrically non-conductive filler is selected from the group consisting of calcium carbonate, calcium oxide, talcum, fumed silica, silica, wollastonite, barium sulphate, glass beads and mixtures thereof.

9. The adhesive sheet according to any one of claims 1 to 8, wherein the electrically non-conductive filler is present in the first part in an amount of from 30 to 50% by weight of the total weight of the first part of the composition, preferably from 32 to 45%, and more preferably from 33 to 40%, and wherein the electrically non-conductive filler is present in the second part in an amount of from 40 to 65% by weight of the total weight of the second part of the composition, preferably from 43 to 60%, and more preferably from 45 to 55%.

10. The adhesive sheet according to any one of claims 1 to 9, wherein the electrically conductive filler is selected from the group consisting of carbon black, carbon nanostructure, silver and mixtures thereof.

11. The adhesive sheet according to any one of claims 1 to 10, comprising electrically conductive particles in an amount of from 0.01 to 2% by weight of the total weight of the first part of the composition, preferably 0.02 to 1%, more preferably from 0.05 to 0.5%.

12. The adhesive sheet according to any one of claims 1 to 11, wherein the curing agent comprises a polyester of thiocarboxylic acids, preferably selected from the group consisting of pentaerythritol tetramercapto-acetate (PETMP), trimethylolpropane trimercaptoacetate (TMPMP), glycol dimercaptoacetate, and mixtures thereof, preferably the curing agent is trimethylolpropane trimercaptoacetate (TMPMP).

13. The adhesive sheet according to any one of claims 1 to 12, wherein said accelerator is an amine-epoxy adduct.

14. A bonded structure comprising
a first material layer (electrically non-conductive);
a first structural adhesive;
a second structural adhesive;
a second material layer (electrically non-conductive);
wherein a cured adhesive sheet as defined in any one of claims 1 to 15 is disposed between the first and second structural adhesives, and wherein the first structural adhesive is on a surface of the first material layer and the second structural adhesive is on a surface of the second material layer.

15. A method of debonding said bonded structure according to claim 14, the method comprising the steps of:
1) applying a voltage across both electrically conductive foil surfaces to form an anodic interface and a cathodic interface; and
2) debonding the surfaces,
wherein the voltage applied in step 1 is preferably from 0.5 to 200 V and it is preferably applied from 1 second to 60 minutes.
